# EUROPÄISCHE PATENTSCHRIFT

(11) **EP 3 197 630 B1**
(45) Veröffentlichungstag und Bekanntmachung des Hinweises auf die Patenterteilung: **03.01.2018**
(21) Anmeldenummer: 16709709.6
(22) Anmeldetag: 22.02.2016
(51) Int. Cl.: B23K 26/38, F16L 11/16, B21C 37/12

(54) **VORRICHTUNG ZUR HERSTELLUNG VON WICKELSCHLÄUCHEN**
APPARATUS FOR PRODUCING COILED TUBES
DISPOSITIF DE FABRICATION DE TUYAUX FLEXIBLES À BANDE ENROULÉE EN HÉLICE

(30) Priorität: 19.03.2015 DE 102015003467; 08.06.2015 US 201562172626 P; 14.09.2015 DE 102015115456; 29.10.2015 DE 102015118476
(43) Veröffentlichungstag der Anmeldung: 02.08.2017
(60) Teilanmeldung: 17173125.0
(73) Patentinhaber: WESTFALIA Metallschlauchtechnik GmbH & Co. KG, 57271 Hilchenbach (DE)
(72) Erfinder: SCHENK, Karsten, 34613 Schwalmstadt (DE); SELTER, Oliver, Dr.-Ing., 57439 Attendorn (DE); WEISS, Matthias, 57271 Hilchenbach (DE); HAUK, Stefan, Dr.-Ing., 57271 Hilchenbach (DE); BAUMHOFF, Dietmar, 57462 Olpe (DE); MÜNKER, Karl-Heinz, 57271 Hilchenbach (DE); HENKELMANN, Michael, Dr., 57271 Hilchenbach (DE); GERHARD, Andreas, 57482 Wenden (DE)
(74) Vertreter: Beckmann, Jürgen
(86) Internationale Anmeldenummer: PCT/EP2016/053630
(87) Internationale Veröffentlichungsnummer: WO 2016/146344

(56) Entgegenhaltungen:
- WO-A1-01/07816
- DE-A1- 10 040 978
- DE-A1-102013 105 678
- DE-B- 1 099 488
- DE-U1- 9 406 824
- US-A- 4 714 508

## Beschreibung

Die Erfindung betrifft eine Vorrichtung zur Herstellung von 2. Wickelschlauch-Produkten. Aus dem Stand der Technik sind Verfahren zur Herstellung und Konfektionierung von Leitungselementen für Abgasanlagen von Kraftfahrzeugen bekannt, welche sequenziell aufgebaut sind. Dabei wird ein Metallband zunächst walzprofiliert und anschließend in einem Wickelprozess zur Endgeometrie ausgeformt. Während das Profil die letzten Umformschnitte durchläuft, wird es mit dem jeweils vorlaufenden Profilquerschnitt eingehakt. Diese Abfolge führt zu einem kontinuierlich gefertigten flexiblen Leitungselement, welches als "Wickelschlauch" bezeichnet wird. In einem nachfolgenden Schnitt erfolgt die Trennung auf eine finale Endlänge, um das gewünschte Wickelschlauch-Produkt zu erhalten.

In diesem Zusammenhang beschreibt das Patent DE19851173C1 ein sequentielles Verfahren und eine Vorrichtung zur Herstellung von Anschlussenden an Metallschläuchen, bei dem an in Langlängen gefertigten Wickelschläuchen eine radial kontinuierlich umlaufende Lasernaht in Sinus- oder Dreieckform erzeugt wird. Im anschließenden Schritt erfolgt ein radial umlaufender Trennschnitt, welcher den Wickelschlauch auf seine finale Länge bringt.

Das Patent EP674964B1 beschreibt ähnliche Prozessschritte, wobei eine linke und eine rechte Steppnaht durch zeitliches Pulsen des Laserstrahls erzeugt werden und im Zwischenraum der beiden Steppnähte ein laserbasierter Trennschnitt zu liegen kommt. Die AT220456B beschreibt einen zweistufigen Trennvorgang für ein gewickeltes Leitungselement. Bei der Vor-Operation wird zunächst ein V-förmiger Einstich auf Grundlage einer Schweißnahtvorbereitung eingebracht. Im Anschluss findet der eigentliche Trennschnitt senkrecht zur Längsachse des Leitungselements statt. Während der beiden Operationen dreht sich das Leitungselement. Die Operationsköpfe weisen dabei eine senkrecht zur Rohrachse stehende Bewegungsrichtung auf und werden im "fliegenden" Verband synchron zur Vorschubrichtung des Leitungselements mitbewegt.

Bei einem zweitstufigen Trennvorgang gemäß der DE102007018927A1 erfolgt keine Rotation des zu trennenden Profils. Nur der Operationskopf bewegt sich senkrecht zur Längsachse und wird in einem "fliegenden" Verband synchron zur Vorschubrichtung des Leitungselements mitbewegt.

Ein ebenfalls stehendes Leitungselement zeigt die EP787553B1, bei dem mehrere Trenneinheiten um dieses herum arbeiten, um es mechanisch zu trennen.

In der DE19851173C1, DE4411246A1 und EP674964B1 werden kombinierte Füge- und Trennverfahren für Metallschläuche vorgestellt, bei denen an in Langlängen gefertigten sich drehenden Wickelschläuchen eine radial kontinuierlich umlaufende Lasernaht erzeugt wird. Die Lasernaht liegt in einer zur Wickelschlauchachse senkrechten Ebene und verbindet die Wickellagen miteinander. Im anschließenden Schritt erfolgt ein radial umlaufender Trennschnitt, welcher den Wickelschlauch auf seine finale Länge bringt. Die Schweiß- und Trenntechnik beruht hierbei vorrangig auf Lasertechnologie.

Ein ähnliches Verfahren beschreibt das Patent US7753083B2. Hier erfolgt die Verschweißung von gewickelten Metallprofilen durch Widerstandsschweißen. Im Anschluss wird der Schlauch mittig in der Schweißnaht getrennt.

Die DE 94 06 824 U1 offenbart ein Verfahren, bei dem Bandlagen eines gewickelten Metallschlauches umfänglich mit einer Steppnaht verschweißt und dann mittels Laserenergie getrennt werden. Der Oberbegriff von Anspruch 1 basiert auf der DE 94 06 824 U1. Die DE 10 99 488 offenbart ein Verfahren zur Herstellung eines schraubennahtgeschweißten Rohres, bei dem ein geschweißtes Rohrstück von einem Wagen aufgenommen wird, der einen Fräser und eine Trennscheibe trägt. Des Weiteren sind Gegendruckrollen vorhanden, die sich beim Schneiden an das Rohr legen, "um es abzustützen und ein Rattern beim Arbeitsvorgang zu vermeiden.

Vor diesem Hintergrund war es Aufgabe der vorliegenden Erfindung, Mittel zur verbesserten Herstellung von Wickelschlauch-Produkten bereitzustellen.

Diese Aufgabe wird durch eine Vorrichtung nach Anspruch 1 gelöst. Vorteilhafte Ausgestaltungen sind in den Unteransprüchen enthalten.

Gemäß einem ersten Aspekt betrifft die Erfindung somit eine Vorrichtung zur Herstellung von Wickelschlauch-Produkten, beispielsweise von Wickelschlauch-Stücken gegebener Länge, welche als Leitungselement in Kraftfahrzeugen verwendet werden können. Im Folgenden soll dabei der Ausdruck "Wickelschlauch" das im Prinzip endlose Zwischenprodukt bezeichnen, das durch Wickeln eines Bandes erzeugt wird, während der Begriff "Wickelschlauch-Produkt" ein hieraus durch Weiterverarbeitung (beispielsweise Abtrennen) erzeugtes Folgeprodukt bezeichnet. Typischerweise wird der Wickelschlauch wie eingangs erläutert aus einem profilierten Metallband erzeugt. Die erfindungsgemäße Vorrichtung enthält die folgenden Komponenten:
- Eine Wickelmaschine zum Wickeln eines Bandes zu einem Wickelschlauch.
- Eine Konfektionierungsmaschine zur Abtrennung von Stücken vorgegebener bzw. gewünschter Länge vom genannten Wickelschlauch und zum Verbinden von Bandlagen in den Endbereichen des Wickelschlauch-Produktes durch eine Fügeoperation, wobei die Konfektionierungsmaschine einen beweglichen Operationskopf enthält.

Bei dem Band kann es sich insbesondere um ein Metallband handeln. Dieses kann bereits bei der Zuführung zur Wickelmaschine vorprofilierte Zwischengeometrien aufweisen. Zusätzlich oder alternativ werden weitere Profilierstufen bis hin zur Endgeometrie an der Wickelmaschine selbst erzeugt. Im Rahmen des Wickelprozesses wird der entstehende Wickelschlauch typischerweise ständig um seine Längsachse gedreht und (kontinuierlich oder diskontinuierlich) axial in Richtung dieser Achse vorgeschoben.

Die in der Konfektionierungsmaschine vom Wickelschlauch abgetrennten Stücke stellen die herzustellenden Wickelschlauch-Produkte dar, welche in der Regel noch weiterverarbeitet werden. Neben der Abtrennung von Schlauchstücken und der Fügeoperation können in der Konfektionierungsmaschine optional weitere Verarbeitungsschritte stattfinden.

Die Beweglichkeit des Operationskopfes der Konfektionierungsmaschine ermöglicht eine besonders flexible Verarbeitung des Wickelschlauches. Der Operationskopf kann dann nämlich einen Bearbeitungsweg auf dem Wickelschlauch unabhängig von einer eventuellen Eigenbewegung des Wickelschlauches (beispielsweise durch axialen Vorschub) anfahren und verfolgen.

Die in der Konfektionierungsmaschine durchgeführte Abtrennung von Stücken vom Wickelschlauch kann mit jeder geeigneten Trenntechnologie erfolgen, beispielsweise durch Stanzen, Schneiden, Scheren, Sägen, Feilen, Brennen, Erodieren oder Elektronenstrahl. Besonders bevorzugt ist es, wenn die Abtrennung mit einem Laser durch Schneiden mittels Laserenergie erfolgt.

Die Fügeoperation kann beispielsweise ein Schweißen (MIG/MAG, Laser, Plasma, Widerstand, oder WIG), ein Löten, ein Kleben oder ein Umformen (wie Nieten, Bördeln, Recken oder Durchziehen) beinhalten. Insbesondere kann ein Verschweißen von Bandwindungen ausgeführt werden, beispielsweise mittels Laserenergie. Ein solches Verschweißen kann insbesondere im Bereich der Trennnaht des abgetrennten Schlauchstückes erfolgen.

Gemäß einer bevorzugten Ausführungsform der Erfindung kann in der Konfektionierungsmaschine die Abtrennung durch Schneiden mittels Laserenergie und die Fügeoperation durch Schweißen mittels Laserenergie erfolgen.

Vorzugsweise enthält die erfindungsgemäße Vorrichtung im vorgenannten Fall zwei unterschiedliche Optiken für das Laserschweißen einerseits und das Lasertrennen andererseits. Dies ermöglicht es, die beiden unterschiedlichen Vorgänge mit jeweils optimalen Einstellungen des Laserstrahls (Durchmesser, Fokus etc.) durchzuführen.

Die vorgenannten zwei Optiken können jeweils eine eigene Laserquelle enthalten. Besonders bevorzugt ist es indes, wenn die erfindungsgemäße Vorrichtung eine Laserquelle und eine integrierte Strahlweiche enthält. Dann kann mit minimalem konstruktivem Aufwand, insbesondere mit einer einzigen Laserquelle, der Vorteil verschiedener Optiken genutzt werden, indem die Strahlweiche je nach Bearbeitungsschritt die jeweilige Optik mit Laserenergie versorgt.

Die oben genannten Optiken, die Laserquelle und/oder die Strahlweiche können insbesondere Teile der Konfektionierungsmaschine sein. Weiterhin können insbesondere die Strahlweiche und/oder die Optiken ganz oder teilweise am Operationskopf der Konfektionierungsmaschine angeordnet sein.

Der Operationskopf der Konfektionierungsmaschine kann in mindestens einer translatorischen Richtung und/oder in mindestens einer rotatorischen Richtung beweglich sein. Vorzugsweise ist der Operationskopf in mindestens zwei Freiheitsgraden beweglich bzw. angetrieben, beispielsweise in
- mindestens zwei translatorischen Richtungen und/oder
- in mindestens einer translatorischen und mindestens einer rotatorischen Richtung. Die translatorische Richtung umfasst in der Regel eine Komponente in Richtung der Achse des herzustellenden Leitungselements und/oder eine Komponente in hierzu radialer Richtung. Die rotatorische Richtung umfasst in der Regel eine Rotation um diese Achse.

Die Vorrichtung ist gemäß der Erfindung dazu eingerichtet, die Bewegung des Operationskopfes axial synchronisiert mit dem Wickelschlauch durchzuführen. Insbesondere kann der Operationskopf synchron zum axialen Vorschub des Wickelschlauches (welcher durch dessen fortgesetztes Wickeln entsteht) mitbewegt werden.

Zusätzlich kann die Vorrichtung optional dazu eingerichtet sein, in der Wickelmaschine die Wickelgeschwindigkeit des Bandes zu verändern, wenn in der Konfektionierungsmaschine die Abtrennung von Stücken vom Wickelschlauch und/oder das Verbinden von Bandlagen in den Endbereichen des Wickelschlauch-Produktes erfolgt. Insbesondere kann die Wickelgeschwindigkeit verringert werden, während Stücke abgetrennt und/oder Bandlagen verbunden werden. Auf diese Weise kann sichergestellt werden, dass die Operationen der Abtrennung bzw. des Fügens mit einer für sie optimalen Geschwindigkeit erfolgen, während in den übrigen Zeiten eine möglichst hohe Prozessgeschwindigkeit erreicht wird.

Wickelschläuche können sowohl mit (kreis-)runden als auch mit unrunden Querschnitten hergestellt werden (vgl. DE 10 2012 013946 A1). Die Beweglichkeit des Operationskopfes hat diesbezüglich den Vorteil, dass der Operationskopf auch bei unrunden Querschnitten immer an der Außenwand des Wickelschlauches positioniert bleiben und dort eine Bearbeitung ausführen kann. Insbesondere kann der Operationskopf diesbezüglich in radialer Richtung beweglich gelagert sein, so dass er den variierenden Abständen der Wickelschlauch-Außenoberfläche von der Schlauchachse folgen kann.

Gemäß einer bevorzugten Ausführungsform der Vorrichtung kann diese zwei oder mehr bewegliche Operationsköpfe enthalten. Diese können insbesondere umfänglich um die Achse des hergestellten Wickelschlauches herum angeordnet sein, wobei der Winkel zwischen benachbarten Operationsköpfen vorzugsweise größer 5°, größer als ca. 45°, größer als ca. 90°, größer als ca. 135°, oder größer als ca. 175° ist. Während einer Relativdrehung zwischen dem Wickelschlauch und den Operationsköpfen können dann die mit den Operationsköpfen verbundenen Verfahren sequentiell auf der Wickelschlauch-Außenoberfläche ausgeführt werden.

Der mindestens eine Operationskopf der Konfektionierungsmaschine kann optional mindestens einen universalen Modulträger aufweisen. Das heißt, dass dieser Modulträger je nach Anwendungsfall mit Modulen (Werkzeugen) von verschiedenen Fertigungstechnologien ausgerüstet werden kann. Zur Anwendung können diesbezüglich alle mechanischen, thermischen, elektrischen und chemischen Verfahren kommen, welche zu den sechs Hauptgruppen der Fertigungstechnologie nach DIN 8580 gehören.

Mehrere Modulträger können optional in axialer Richtung und/oder in tangentialer Richtung (in Bezug auf den herzustellenden Wickelschlauch) nebeneinander angeordnet sein und somit je nach Bewegung des Wickelschlauches bzw. von dessen Endbereich zeitlich nacheinander zum Einsatz kommen.

Gemäß einem zweiten Aspekt betrifft die Erfindung eine Vorrichtung zur Herstellung von Wickelschlauch-Produkten mit den folgenden Komponenten:
- Eine Wickelmaschine zum Wickeln eines Bandes zu einem Wickelschlauch.
- Eine Konfektionierungsmaschine zur Abtrennung von Stücken vorgegebener bzw. gewünschter Länge vom genannten Wickelschlauch.
- Eine Kraftentkopplungseinheit, welche definitionsgemäß der Aufnahme von Kräften aus dem genannten Wickelschlauch dient, wobei diese Kräfte von der Wickelmaschine und/oder von der Konfektionierungsmaschine in den Wickelschlauch eingeleitet werden können.

Die Vorrichtung gemäß dem zweiten Aspekt weist auch die Merkmale der Vorrichtung gemäß dem ersten Aspekt auf, d.h. die Konfektionierungsmaschine ist auch für das Verbinden von Bandlagen in den Endbereichen des Wickelschlauch-Produktes durch eine Fügeoperation eingerichtet und enthält einen beweglichen Operationskopf. Alle für die Vorrichtung gemäß dem ersten Aspekt getroffenen Aussagen und Erläuterungen gelten daher sinngemäß auch für die Vorrichtung nach dem zweiten Aspekt und umgekehrt.

Durch die Kraftentkopplungseinheit können Kräfte, die von der Wickelmaschine oder von der Konfektionierungsmaschine auf den Wickelschlauch ausgeübt und durch den Wickelschlauch dann entlang seiner Achse weitergeleitet werden, ganz oder zumindest teilweise aufgenommen werden. Die Weiterleitung solcher Kräfte entlang des Wickelschlauches wird somit zumindest teilweise unterdrückt, so dass durch die Kräfte eventuell ausgeübte Störungen in anderen Bearbeitungsstationen verhindert oder zumindest reduziert werden können. Vorzugsweise nimmt die Kraftentkopplungseinheit mehr als 50 %, mehr als 80 %, und besonders bevorzugt ca. 100 % der in den Wickelschlauch eingeleiteten Kraft auf.

Die Kraftentkopplungseinheit weist in der Regel eine mehr oder weniger große, lokal begrenzte Wirkzone auf, innerhalb welcher sie mit dem Wickelschlauch zur Aufnahme der Kräfte zusammenwirkt. Grundsätzlich kann diese Wirkzone sich an jeder gewünschten bzw. geeigneten Position des Wickelschlauches befinden. Vorzugsweise befindet sich die Wirkzone in einem Bereich entlang der Erstreckung eines hergestellten Wickelschlauches zwischen der Wickelmaschine und der Konfektionierungsmaschine. Auf diese Weise kann im Betrieb der Vorrichtung verhindert werden, dass von der Wickelmaschine ausgeübte Kräfte sich in die Konfektionierungsmaschine hinein auswirken und dort zu Prozessstörungen führen, ebenso wie in umgekehrter Richtung Krafteinwirkungen von der Konfektionierungsmaschine in die Wickelmaschine unterbunden werden können.

Die Kraftentkopplungseinheit kann insbesondere eine eigenständige Einrichtung sein, welche unabhängig von der Wickelmaschine und der Konfektionierungsmaschine eingesetzt und aufgestellt werden kann. Die Kraftentkopplungseinheit kann jedoch auch baulich und/oder funktional mit der Wickelmaschine und/oder mit der Konfektionierungsmaschine gekoppelt sein, wenn sich dies als vorteilhaft erweist. Bei einer derartigen Kopplung ist zu beachten, dass von der Kraftentkopplungseinheit aufgenommene Kräfte an die entsprechende Trägermaschine weitergeleitet werden.

Die Aufnahme von Kräften durch die Kraftentkopplungseinheit kann grundsätzlich auf verschiedene Weise geschehen, beispielsweise berührungslos über magnetische Felder oder über pneumatisch gedämpfte Puffer. Insbesondere kann in die Kraftentkopplungseinheit jedoch mindestens ein Kontaktelement aufweisen, welches in kraftschlüssigem und/oder in formschlüssigem Kontakt und/oder in Reibkontakt zum Wickelschlauch steht, wenn sich während des Betriebes ein Wickelschlauch in der Vorrichtung befindet (die letztgenannte Bedingung wird im Folgenden immer implizit angenommen, wenn der Wickelschlauch erwähnt wird). Ein formschlüssiger Kontakt kann beispielsweise durch eine Ankopplung an die (z. B. zylindrische) Außenoberfläche des Wickelschlauches erfolgen, um diesen in radialer Richtung durch Formschluss zu fixieren. Insbesondere kann ein Formschluss auch in axialer Richtung erfolgen, um den Schlauch in Axialrichtung zu fixieren bzw. entsprechende Kräfte auffangen zu können. Bei einem solchen Formschluss kann beispielsweise ein Eingriff in Vertiefungen entlang der Windungen des Wickelschlauches erfolgen.

Um eine einseitige Krafteinwirkung auf den Wickelschlauch zu vermeiden, können zwei oder mehr der vorstehend genannten Kontaktelemente umfänglich verteilt um den Wickelschlauch herum angeordnet sein. Aus Symmetriegründen ist dabei eine äquidistante Verteilung der Kontaktelemente zu bevorzugen. Beispielsweise können drei Kontaktelemente in einem sequentiellen Winkelabstand von 120 Grad, vier Kontaktelemente in einem Winkelabstand von 90 Grad, fünf Kontaktelemente in einem Winkelabstand von 72 Grad, sechs Kontaktelemente in einem Winkelabstand von 60 Grad bzw. allgemein n Kontaktelemente in einem Winkelabstand von 360°/n angeordnet sein. Des Weiteren ist es möglich, dass das Kontaktelement ringförmig kontinuierlich den Wickelschlauch umgibt.

Das mindestens eine Kontaktelement ist vorzugsweise in mindestens einer Richtung frei positionierbar. Zusätzlich oder alternativ kann es in mindestens einer Richtung beweglich angeordnet sein, insbesondere beweglich gegen eine in eine Ruhelage drängende Rückstellkraft. Auf diese Weise kann die Kraftentkopplungseinheit mit einer gewissen Flexibilität versehen werden, durch welche Toleranzen und Prozessschwankungen ausgeglichen werden können.

Das mindestens eine Kontaktelement kann optional in Reibkontakt zum Wickelschlauch stehen. Das Kontaktelement kann dabei insbesondere so ausgestaltet sein, dass eine Bewegung des Wickelschlauches relativ zu dem Element (in Axialrichtung und/oder Tangentialrichtung des Wickelschlauches) eine die Bewegung hemmende Reibungskraft hervorruft. Auf diese Weise kann die Weiterleitung von Kräften gedämpft oder unterbunden werden, welche mit einer sichtbaren (makroskopischen) Bewegung des Wickelschlauches einhergehen.

Gemäß einer anderen Ausführungsform kann das Kontaktelement eine Formrolle aufweisen, welche in eine Windung des Wickelschlauches eingreift. In diesem Falle lässt sich eine formschlüssige Kopplung zwischen Kontaktelement und Wickelschlauch herstellen, durch welche auch statisch übertragene Kräfte (bei denen sich der Wickelschlauch wie ein starrer Körper verhält) aufgefangen werden können. Die Formrolle kann insbesondere drehbar gelagert sein, sodass bestimmte Bewegungen des Wickelschlauches relativ zur Rolle reibungsarm bzw. ungehindert möglich sind, insbesondere Rotationen des Wickelschlauches um seine Längsachse.

Während des Betriebs der Vorrichtung wird in der Regel kontinuierlich Bandmaterial zu einem Wickelschlauch gewickelt, von welchem dann (diskontinuierlich) Wickelschlauch-Produkte abgetrennt werden. Bei einem derartigen Fließprozess wird typischerweise der entstehende Wickelschlauch an den Bearbeitungsstationen vorbeitransportiert. Zu diesem Zweck weist die Wickelmaschine und/oder die Konfektionierungsmaschine und/oder die Kraftentkopplungseinheit vorzugsweise eine Einrichtung zu Bewegung des Wickelschlauches in Richtung der Schlauchachse und/oder zur Rotation des Wickelschlauches um die Schlauchachse auf.

Die Kraftentkopplungseinheit ist typischerweise ein baulich eigenständiges Produkt (separat von der Wickelmaschine und der Konfektionierungsmaschine und optional mit einer dieser Maschinen verbindbar), welches selbstständig verkehrsfähig / funktionsfähig ist. Die Erfindung betrifft daher auch als eigenständigen Gegenstand eine Kraftentkopplungseinheit für eine Vorrichtung der oben beschriebenen Art. Das heißt, dass mit einer solchen Kraftentkopplungseinheit Kräfte aus einem Wickelschlauch aufgenommen werden können, welche in diesen an einem anderen Ort eingeleitet wurden, beispielsweise von einer Wickelmaschine oder einer Konfektionierungsmaschine.

Im Folgenden wird die Erfindung mit Hilfe der Figuren beispielhaft näher erläutert. Dabei zeigt:
- Fig. 1: eine schematische Seitenansicht einer ersten Vorrichtung zur Herstellung von Wickelschlauch-Produkten;
- Fig. 2: schematisch die Anordnung einer Laserquelle und einer Strahlweiche in der Vorrichtung von Figur 1;
- Fig. 3: eine schematische Seitenansicht einer zweiten Vorrichtung zur Herstellung von Wickelschlauch-Produkten, die mehrere Modulträger aufweist;
- Fig. 4: eine Aufsicht auf den Operationskopf der Vorrichtung von Figur 3;
- Fig. 5: eine schematische Seitenansicht einer dritten Vorrichtung zur Herstellung von Wickelschlauch-Produkten, die eine Kraftentkopplungseinheit enthält;
- Fig. 6: eine Ausführungsform der Kraftentkopplungseinheit mit Reibkörpern;
- Fig. 7: eine Ausführungsform der Kraftentkopplungseinheit mit Formrollen.

In den Figuren tragen identische oder vergleichbare Komponenten verschiedener Ausführungsformen um Vielfache von 1000 differierende Bezugszeichen.

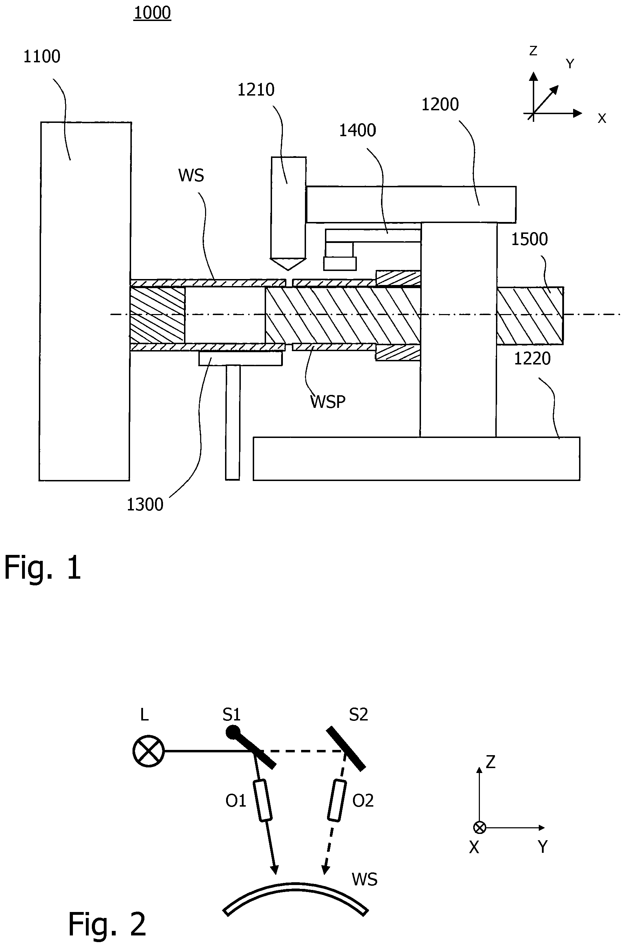

In Figur 1 ist in einer schematischen Seitenansicht eine erste Ausführungsform einer Vorrichtung 1000 gemäß der vorliegenden Erfindung dargestellt. Die Vorrichtung dient der Herstellung von Wickelschlauch-Produkten WSP und umfasst die folgenden Komponenten:
- Eine Wickelmaschine 1100 (synonym auch "Umformeinheit" genannt), in welcher ein zugeführtes (Metall-) Band (nicht dargestellt) zu einem Wickelschlauch WS gewickelt wird. Der so hergestellte Wickelschlauch WS verlässt die Wickelmaschine kontinuierlich in X-Richtung (in Figur 1 nach rechts), wobei er sich herstellungsbedingt um die Schlauchachse (X-Achse) dreht und gleichzeitig in diese Axialrichtung wandert.
- Eine Konfektionierungsmaschine 1200 (synonym auch "Schneid-Trenneinheit" genannt), in welcher eine Konfektionierung des hergestellten Wickelschlauches WS erfolgt. Die Konfektionierung kann dabei insbesondere das Abtrennen von Schlauchstücken gewünschter Länge beinhalten. Typischerweise findet in der Konfektionierungsmaschine auch ein Verbinden (z.B. Verschweißen) von Bandwindungen statt, um ein nachträgliches Aufspringen des Schlauches zu verhindern. Die abgetrennten und gegebenenfalls verbundenen bzw. verschweißten Schlauchstücke stellen die mit der Vorrichtung herzustellenden Wickelschlauch-Produkte WSP dar. Diese können beispielsweise in Entkopplungselementen zur Entkopplung von Schwingungen in Abgasanlagen von Kraftfahrzeugen verwendet werden.

Die dargestellte Vorrichtung 1000 enthält weiterhin optional Transportvorrichtungen 1400, Haltevorrichtungen 1300, und/oder eine Absauglanze 1500. Mit der Vorrichtung 1000 wird ein Gesamtsystem ohne Umlaufbestände bereitgestellt, welches aus Spaltband einen Wickelschlauch herstellt, welcher direkt seine finale Endlänge und seinen finalen Endzustand erhält. Die beiden Prozessschritte "Erzeugung des Wickelschlauches in Langlängen" und "Trennen auf Endlänge" sind dabei integriert und synchronisiert, so dass die fertig getrennten Wickelschläuche kontinuierlich entstehen, ohne den Wickelprozess zu unterbrechen.

Bei einer typischen Realisierung beinhaltet die Wickelmaschine 1100 bzw. Umformeinheit eine Abrollvorrichtung für Spaltband, eine Walzprofiliereinheit sowie die für den Kernprozess erforderlichen Werkzeuge, Vorrichtungen und Antriebe.

Dabei wird im Walzprofilierprozess aus dem ebenen Spaltband eine Zwischengeometrie im Profilquerschnitt ausgeformt, welche im nachgeschalteten Wickelprozess zur finalen Geometrie weiter geformt wird. Dabei erfolgt das Einhaken der vorlaufenden Windung des Wickelschlauches mit der aus der Profilierung einlaufenden Windung. In diesem kontinuierlichen Prozess entsteht ein Wickelschlauch WS, dessen axiale Erstreckung im Fortgang des Prozesses nach und nach zunimmt, was vorzugsweise durch Haltevorrichtungen 1300 derart unterstützt wird, dass der flexible Schlauch seine Reibeigenschaften behält und ferner nicht der Schwerkraft folgt, sondern seine gerade Form behält.

Die Konfektionierungsmaschine 1200 bzw. Schneid-Trenn-Einheit enthält einen Operationskopf 1210, welcher zumindest in einer Achse verfahrbar ist und auf einer in Achsrichtung des Wickelschlauches WS (X-Achse) ausgerichteten Positioniereinheit 1220 montiert ist. Die Besonderheit bei der Vorrichtung 1000 ist, dass bei Erreichen einer für den Prozesskopf 1210 günstigen Position des Wickelschlauches WS dieser eine axiale Synchronisierung erfährt. Diese sorgt für eine absolute Positionierung des Operationskopfes 1210 gegenüber dem noch stetig weiter drehenden und anwachsenden Wickelschlauch WS. Es folgt eine kombinierte Schweiß-Schneid-Trenn Operation, bei welcher ein in Endlänge mit angebundenen Bandkanten versehenes final konfektioniertes Wickelschlauch-Produkt WSP geschaffen wird.

Eine Absauglanze 1500, welche relativ zur Konfektionierungsmaschine 1200 positioniert ist, sorgt für die Abführung der Staub-und Partikelelemente und trägt damit zur erforderlichen Sauberkeit innerhalb des Wickelschlauches bei.

Unter Zuhilfenahme einer Transportvorrichtung 1400 wird das final konfektionierte Wickelschlauch-Produkt WSP entnommen, ohne den Umformprozess zu unterbrechen. Nach der Entnahme wird die Konfektionierungsmaschine 1200 erneut relativ zum auslaufenden Wickelschlauch WS positioniert und derselbe Ablauf startet erneut.

Durch die zuvor beschriebene Anordnung ist eine stetige, kontinuierliche Konfektionierung und Bereitstellung eines final auf Endlänge getrennten Wickelschlauches möglich, ohne den Fertigungsprozess zu unterbrechen.

Eine Ausführungsform des Operationskopfes 1210 ist eine kombinierte Schweiß-Schneid-Trennvorrichtung. Neben einer kombinierten Einheit können auch in einer bevorzugten Ausführungsform zwei separate Einheiten, welche die Aufgaben Schweißen und Schneiden separat erfüllen, zum Einsatz kommen. Die Schweißoperation, die Schneidoperation und/oder die Trennoperation kann auf mechanischen als auch thermischen Methoden beruhen.

Die Wickelgeschwindigkeit (gemessen z.B. in Umdrehungen pro Minute), mit welcher in der Wickelmaschine 1100 der Wickelschlauch WS hergestellt wird, sollte zur Maximierung der Produktionsrate möglichst hoch sein, wobei in der Regel Randbedingungen aufgrund der Art des verarbeiteten Bandes und der Eigenschaften des gewünschten Produktes zu beachten sind. Des Weiteren kann die Wickelgeschwindigkeit vorzugsweise verändert werden, während am Wickelschlauch WS Fügeoperationen und/oder Trennoperationen durchgeführt werden. Insbesondere kann die Wickelgeschwindigkeit während dieser Zeiten verringert werden, damit diese Teilprozesse mit der für sie geeigneten Geschwindigkeit durchgeführt werden können. Die für ein Schweißen oder einen Trennschnitt aufgebrachte Energie benötigt beispielsweise eine gewisse Mindestzeit für die Einwirkung auf das Bandmaterial, wodurch sich Obergrenzen für die Durchführungsgeschwindigkeit ergeben.

Eine bevorzugte Ausführungsform ist ein auf Laser-Technologie basierendes Schweißen und Schneiden des Wickelschlauches WS. Die Praxiserfahrung zeigt, dass ein stabiles Laserschweißen und anschließendes Lasertrennen mit zwei unterschiedlichen Optiken prozesssicher darstellbar ist. Da Schweißen und Schneiden sequentiell erfolgen, ist hierbei eine integrierte Strahlweiche vorteilhaft, damit die Laserenergie von einer einzigen Laserquelle bereitgestellt werden kann.

Figur 2 zeigt diesbezüglich schematisch die Anordnung einer Laserquelle L und einer Strahlweiche S1 in der Vorrichtung 1000 von Figur 1. Ein von der Laserquelle L ausgehender Laserstrahl wird bei der dargestellten ersten Einstellung der Strahlweiche S1 in eine erste Optik O1 (beispielsweise eine für das Schweißen optimierte Optik) gelenkt und von dieser weiter auf die Außenoberfläche des Wickelschlauches WS geleitet (durchgezogen dargestellter Strahlengang). In einer zweiten Einstellung der Strahlweiche S1 (Wegklappen des dargestellten Spiegels) erreicht der Laserstrahl dagegen einen Spiegel S2, von dem er in eine zweite Optik O2 (beispielsweise eine für das Schneiden optimierte Optik) und von dieser auf die Außenoberfläche des Wickelschlauches WS gelenkt wird (gestrichelt dargestellter Strahlengang). Zumindest einige der dargestellten Bauteile (Laserquelle L, Strahlweiche S1, Spiegel S2, Optiken O1 und O2) können ganz oder teilweise in der Konfektionierungsmaschine 1200 oder im Operationskopf 1210 angeordnet sein.

Weitere vorteilhafte bzw. optionale Merkmale der Vorrichtung 1000 können sein:
- Eine Multi-Parameter Synchronisierung zwischen der Wickelmaschine 1100 und der Konfektionierungsmaschine 1200.
- Eine Multi-Parameter Synchronisierung zwischen dem Operationskopf 1210 der Konfektionierungsmaschine 1200 und der Absauglanze 1500.
- Die Drehung des Wickelschlauches WS in der Wickelmaschine 1100 bildet die kinematische Grundlage zur Herstellung einer radial umlaufenden Schweißnaht und/oder eines radial umlaufenden Trennschnittes.
- Die Wickelschlauch-Produkte können ohne Stillstand des Umformprozesses aus der Anlage entnommen werden.
- In einem synchronisierten, ununterbrochenen Prozess wird aus einem ebenen Metallband ein auf definierte Länge getrennter Wickelschlauch erzeugt, bei dem die Bandlagen in den Endbereichen durch eine Fügeoperation miteinander verbunden sind.
- Bei Schweiß- und/oder Schneidoperationen die wird die Fokuslage auf der Schlauchoberfläche online mit einer Multi-Parameter Abstandssensorik geregelt und mit dem gesamten Umformprozess synchronisiert.

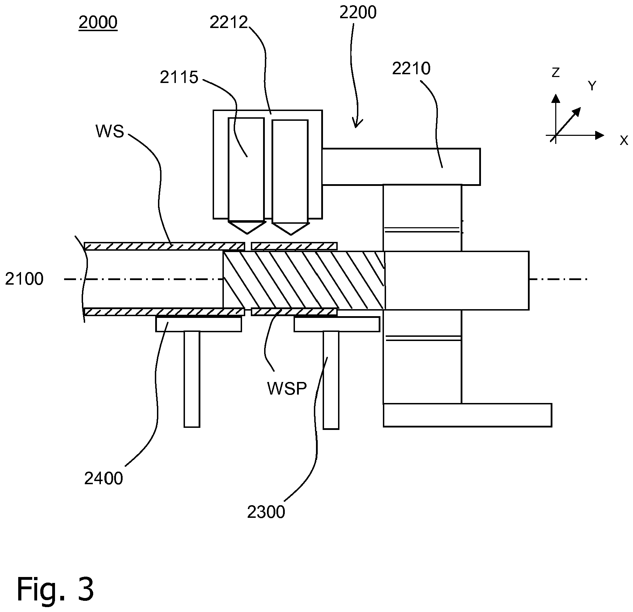

Figur 3 zeigt schematisch eine zweite Ausführungsform einer erfindungsgemäßen Vorrichtung 2000 zur Herstellung von Wickelschlauch-Produkten WSP. Komponenten, die mit solchen der Vorrichtung 1000 von Figur 1 identisch oder ähnlich sind, tragen diesen gegenüber um 1000 erhöhte Bezugszeichen und werden im Folgenden nicht erneut im Einzelnen erläutert.

Die Vorrichtung 2000 enthält:
- Ein Wickelmaschine 2100 (nicht näher dargestellt), in welcher durch kontinuierliches Wickeln eines profilierten Bandes ein Abschnitt eines Leitungselementes WS erzeugt wird. Dieser wird über eine optionale Transportvorrichtung 2400 in Richtung der X-Achse (Schlauchachse, in der Figur nach rechts) vorangeschoben.
- Eine Konfektionierungsmaschine 2200 zur Abtrennung von Wickelschlauch-Produkten WSP vom Leitungselement WS.
- Einen in mindestens zwei Freiheitsgraden beweglichen bzw. angetrieben Operationskopf 2210.
- Mindestens einen zum Operationskopf 2210 gehörenden Prozessorkopf 2212 mit mindestens einem Modulträger 2115 für die Aufnahme von Fertigungstechnologie-Einheiten.
- Optional mindestens eine Haltevorrichtung 2300 für das zu bearbeitende Leitungselement WS und/oder für dessen Endbereich WSP.

Bei dem Leitungselement handelt es sich vorzugsweise um ein gewickeltes Leitungselement (z.B. einen Wickelschlauch WS aus einem profilierten Metallband). Typischerweise wird das Leitungselement im selben Prozess durch Wickeln hergestellt, in dem auch die Bearbeitung durch das in Figur 3 detailliert dargestellte Verarbeitungsverfahren bzw. die Verarbeitungsvorrichtung erfolgt. Das Verarbeitungsverfahren bzw. die Verarbeitungsvorrichtung operieren dabei in der Regel in einem Endbereich des in größerer Länge durch Wickeln hergestellten Leitungselementes, wobei der Endbereich in etwa die Länge eines gebrauchsfertigen Leitungselementes umfasst. Typischerweise wird also fortlaufend ein Abschnitt des Leitungselementes gewickelt und von diesem wird im selben Prozess in einem Endbereich eine gewünschte Länge abgetrennt. Des Weiteren erfolgt optional parallel zum Wickelprozess (und zum intervallartig stattfindenden Trennprozess) eine Fügeoperation, in welcher beispielsweise Windungen des gewickelten Bandes verbunden werden (z.B. durch Schweißen). Das Trennen und das Fügen werden dabei in der Vorrichtung 2000 vorzugsweise an mindestens einem Kombinationsmodul an einem Prozessorkopf 2212 des Operationskopfes 2210 durchgeführt oder von mindestens zwei Modulen 2115 an einem oder an verschiedenen Prozessorköpfen des Operationskopfes durchgeführt.

Der in mehreren Freiheitsgraden angetriebene Operationskopf 2210, der im Endbereich WSP des gewickelten Schlauches angeordnet ist, erzeugt translatorische (vorzugsweise in X-Richtung, optional aber auch in Y- und/oder Z-Richtung) als auch rotarische (vorzugsweise in der Y,Z Ebene um die X-Achse) Bewegungen des Prozessorkopfes 2212 und kann je nach Einsatzfall bis zu 6 Freiheitsgrade abbilden. Auch bei unrunden Querschnitten des Leitungselementes WS kann der Prozessorkopf (durch Bewegung in radialer Z-Richtung) so immer an der Außenwand des Leitungselementes WS positioniert bleiben und dort eine Bearbeitung ausführen.

Eine wesentliche Funktion stellt dabei die mit dem in X-Richtung wachsenden Ende des Leitungselementes geregelte Achse dar. Sie dient zur Synchronisierung der Fertigungsoperation in Längsrichtung (X-Richtung) des Leitungselements WS. Der Operationskopf 2210 trägt mindestens einen Prozessorkopf 2212, in welchem ein oder mehrere Modulträger 2115 für den jeweiligen Anwendungsfall die Fertigungstechnologien beherbergen. Die Modulträger können optional in axialer Richtung (X-Richtung) und/oder in tangentialer Richtung (Y-Richtung) nebeneinander angeordnet sein und somit je nach Bewegung des Leitungselements WS bzw. des Endbereichs WSP zeitlich nacheinander zum Einsatz kommen.

In den Modulträgern 2115 kommen zur Anwendung alle mechanischen, thermischen, elektrischen und chemischen Verfahren, welche zu den sechs Hauptgruppen der Fertigungstechnologie nach DIN 8580 gehören. In einer vorteilhaften Ausgestaltung sind im Bereich der Trenntechnologie beispielhaft aber nicht abschließend aufgeführt zu nennen:
- Trennen durch Stanzen, Schneiden, Scheren, Sägen, Feilen
- Trennen durch Brennen
- Trennen durch Erodieren, Elektronenstrahl oder Laser.

Im Bereich der Fügetechnologie kommen beispielhaft aber nicht abschließend aufgeführt im Gebiet der nicht lösbaren Verbindungen zum Einsatz:
- Fügen durch Schweißen mit MIG/MAG, Laser, Plasma, Widerstand, WIG
- Fügen durch Löten
- Fügen durch Kleben
- Fügen durch Umformen wie Nieten, Bördeln, Recken oder Durchziehen.

Durch das Vorhandensein der variablen Modulträger 2115 sind mono-disziplinäre als auch multi-disziplinäre Technologieanordnungen und -kombinationen ausführbar.

Transportvorrichtungen 2400 für das bearbeitete Leitungselement WS und/oder Haltevorrichtungen 2300 für dessen Endbereich WSP unterstützen optional die oben aufgeführten Fertigungsoperationen.

Durch die zuvor beschriebene Anordnung ist es möglich, kontinuierlich aber auch diskontinuierlich querschnittsunabhängig Leitungselemente in einem oder mehreren Fertigungsschritten zu verarbeiten, wobei je nach Fertigungsaufgabe ein oder mehrere Fertigungstechnologien zum Einsatz kommen können. Insbesondere kann ein Modulträger 2115 eine Schweißeinheit zum Verbinden der Windungen des gewickelten Bandes aufweisen und ein anderer (nachrangig zum Einsatz kommender) Modulträger das Abtrennen eines fertigen Stückes des Leitungselementes bewirken.

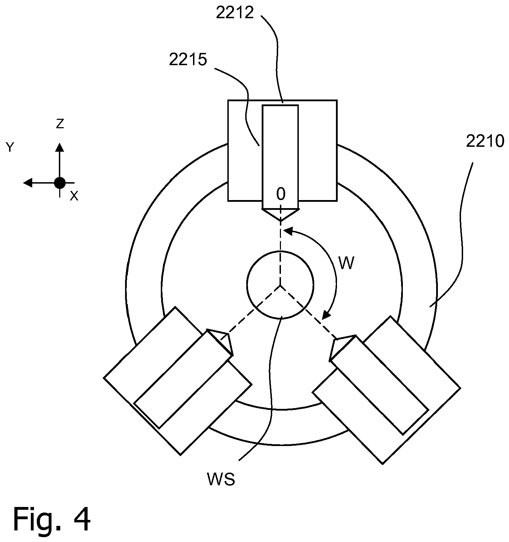

Eine optionale Ausführungsform des Operationskopfes 2210 zeigt Figur 4. Neben einem Prozessorkopf 2212, der senkrecht auf der Längsachse des Leitungselements WS steht, kann der Operationskopf 2210 weitere modulare Prozessorköpfe tragen, welche vorzugsweise in einem Winkel W von 180°, 120°, oder 90° relativ zueinander angeordnet sind. Jeder modulare Prozessorkopf 2212 enthält mindestens einen Modulträger 2215, um Fertigungstechnologie-Einheiten aufzunehmen. Eine vorteilhafte Ausgestaltung beinhaltet einen Trenn- und einen Schweißkopf.

Weitere vorteilhafte bzw. optionale Merkmale der Vorrichtung 2000 können sein:
- Der Operationskopf 2210 weist eine parametergeregelte Achse auf zur Synchronisierung mit dem sich translatorisch bewegenden Leitungselement WS und/oder Endbereich WSP des Leitungselements.
- Das Leitungselement WS steht oder rotiert zumindest phasenweise während der Verarbeitung, wobei das Leitungselement und/oder der Endbereich des Leitungselements sich bei der Rotation vorzugsweise auch translatorisch bewegt (z.B. durch Vorschub in Richtung der X-Achse).
- Der Operationskopf 2210 weist mindestens einen Prozessorkopf 2212 mit mindestens einem universalen Modulträger 2215 auf. Auf einem derartigen Modulträger können alternativ Einheiten von verschiedenen Fertigungstechnologien montiert werden, z.B. eine Schweißeinheit oder eine Schneideinheit.
- Benachbarte Prozessorköpfe 2212 sind in einem Winkel von mehr als ca. 5°, ca. 45°, ca. 90°, ca. 135°, ca. 175° angeordnet. Bei einer Rotation des Leitungselements bzw. seines Endbereichs um die eigene Achse erfolgt dann eine zeitlich serielle Bearbeitung durch die verschiedenen Prozessorköpfe.
- Ein Prozessorkopf weist zwei, drei oder vier Modulträger 2215 auf zur Installation von Technologie-Einheiten, z.B. von Trenn- oder Fügetechnologien.
- Das Leitungselement steht während des Weiterverarbeitungsprozesses zumindest phasenweise, oder es rotiert während des Weiterverarbeitungsprozesses zumindest phasenweise, wobei das Leitungselement und/oder der Endbereich des Leitungselements sich dabei vorzugsweise auch translatorisch bewegt.

Zusammenfassend betrifft das Ausführungsbeispiel von Figur 3 und 4 somit ein Verarbeitungsverfahren und eine Verarbeitungsvorrichtung für Leitungselemente, wobei ein Operationskopf in mehreren translatorischen und/oder rotatorischen Bewegungsrichtungen angetrieben ist und dieser eine Synchronisierung mit der Vorschubrichtung des Leitungselements als "fliegender" Verband aufweist. Dabei weist der Operationskopf mindestens einen Prozessorkopf mit mindestens einem universalen Modulträger auf, um Technologie-Einheiten zu tragen. Dadurch wird ein von der Geometrie des Leitungselementes unabhängiges, Technologie variables Verarbeitungsverfahren bereitgestellt.

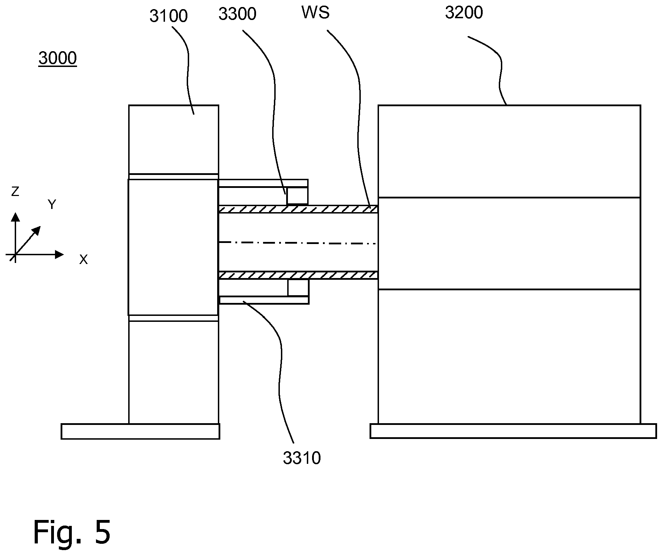

In Figur 5 ist eine dritte Ausführungsform einer Vorrichtung 3000 dargestellt. Komponenten, die mit solchen der Vorrichtung 1000 von Figur 1 oder der Vorrichtung 2000 von Figur 3 identisch oder ähnlich sind, tragen diesen gegenüber um 2000 bzw. 1000 erhöhte Bezugszeichen und werden im Folgenden nicht erneut im Einzelnen erläutert.

Die Vorrichtung 3000 dient der Herstellung von Wickelschlauch-Produkten WSP und umfasst die folgenden Komponenten:
- Eine Wickelmaschine 3100, in welcher ein zugeführtes (Metall-) Band zu einem Wickelschlauch WS gewickelt wird.
- Eine Konfektionierungsmaschine 3200, in welcher eine Konfektionierung des hergestellten Wickelschlauches WS erfolgt. Die Konfektionierung kann dabei insbesondere das Abtrennen von Schlauchstücken gewünschter Länge beinhalten. Typischerweise findet in der Konfektionierungsmaschine auch ein Verbinden (z.B. Verschweißen) von Bandwindungen statt, um ein nachträgliches Aufspringen des Schlauches zu verhindern.
- Eine Kraftentkopplungseinheit 3300, welche im dargestellten Beispiel durch Stützen 3310 an der Wickelmaschine 3100 befestigt ist und sich im Bereich des Wickelschlauches zwischen der Wickelmaschine 3100 und der Konfektionierungsmaschine 3200 befindet.

Die Kraftentkopplungseinheit wechselwirkt mit dem Wickelschlauch WS in einer Wirkzone dergestalt, dass sie Kräfte aus dem Wickelschlauch aufnimmt, welche von der Wickelmaschine und/oder von der Konfektionierungsmaschine in den Schlauch eingeleitet wurden. Die Weiterleitung derartiger Kräfte wird somit ganz oder zumindest teilweise unterbunden. Eine wechselseitige Störung der Bearbeitungsprozesse in der Wickelmaschine einerseits bzw. der Konfektionierungsmaschine andererseits kann auf diese Weise verhindert bzw. reduziert werden. Die damit erzielte Entkopplung der Maschinen ist insbesondere bei sehr lockeren, flexiblen Wickelschläuchen vorteilhaft (bei denen die für eine Streckung aufzuwendende Arbeit nahezu null Joule ist).

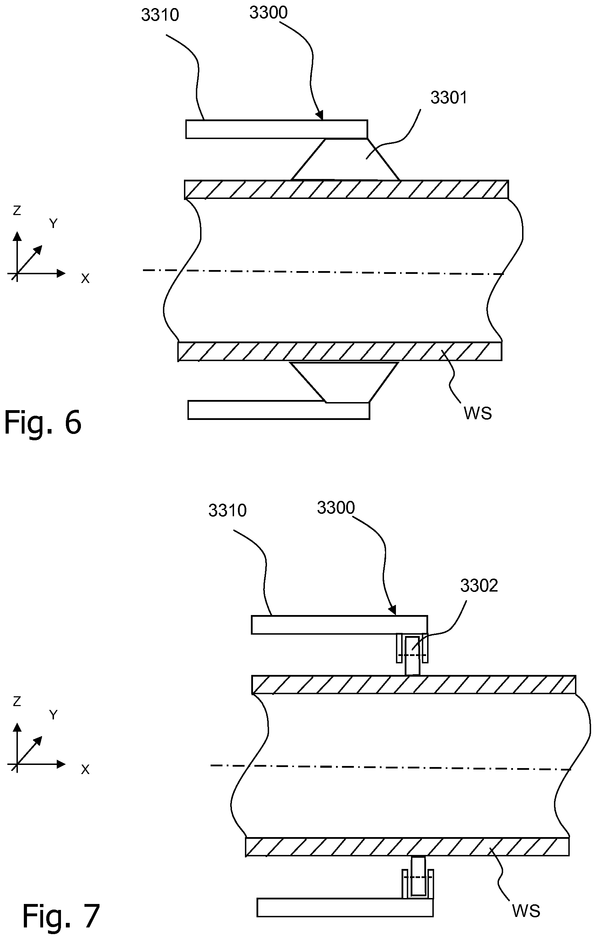

Die Aufnahme von Kräften aus dem Wickelschlauch WS durch die Kraftentkopplungseinheit 3300 kann auf verschiedene Weisen erfolgen. Figur 6 zeigt diesbezüglich eine erste Option, bei der Kontaktelemente in Form von Reibkörpern 3301 mit der Außenoberfläche des Wickelschlauches WS in Reibkontakt treten. Je nach Ausgestaltung der Reibkörper können dabei alle Bewegungen des Wickelschlauches relativ zum Reibkörper gleichmäßig gedämpft werden oder vorzugsweise bestimmte Bewegungen, beispielsweise in Axialrichtung stärker als in andere Richtungen (z. B. Tangentialbewegungen).

Figur 7 zeigt eine alternative Ausgestaltung, bei welcher die Kraftentkopplungseinheit 3300 Formrollen 3302 enthält. Wie in der Figur nicht im Einzelnen dargestellt ist, können die Formrollen 3302 (z.B. mit einer spitz zulaufenden Rollfläche) in Vertiefungen entlang der Windungen des Wickelschlauches WS eingreifen und somit für einen Formschluss (in axialer Richtung) sorgen. Vorzugsweise sind die Formrollen 3302 drehbeweglich gelagert, sodass sie eine Rotation des Schlauches WS quasi nicht behindern (wenn die Rollendrehachse parallel zur Schlauchachse bzw. senkrecht zur Linie der Windungen steht).

Während in den Figuren aus Darstellungsgründen Kraftentkopplungseinheiten 3300 mit zwei sich diametral gegenüberliegenden Kontaktelementen 3301, 3302 dargestellt sind, können optional auch andere Anzahlen und Anordnungen von Kontaktelementen vorgesehen sein. Insbesondere können Kontaktelemente äquidistant um den Umfang des Wickelschlauches herum verteilt sein oder ringförmig den Schlauch vollumfänglich umgeben. Des Weiteren können die Kontaktelemente 3301, 3302 der Figuren 6 und 7 selbstverständlich auch kombiniert in derselben Kraftentkopplungseinheit 3300 angeordnet werden.

Die Kraftentkopplungseinheit ist vorzugsweise in mindestens einer der Richtungen X, Y und/oder Z positionierbar, beispielsweise durch elektrische, hydraulische und/oder pneumatische Positionierungselemente. Des Weiteren können die Kraftentkopplungseinheit 3300 bzw. ihre Kontaktelemente 3301, 3302 elastisch gelagert sein, sodass sie gegen Rückstellkräfte bestimmte Ausweichbewegungen vornehmen können.

### Bezugszeichenliste::

- 1000, 2000, 3000: Vorrichtung zur Herstellung von Wickelschlauch-Produkten
- 1100, 2100, 3100: Wickelmaschine
- 1200, 2200, 3200: Konfektionierungsmaschine
- 1210, 2210: Operationskopf
- 2212: Prozessorkopf
- 2215: Modulträger
- 1220: Positioniereinheit
- 1300, 2300, 3300: Haltevorrichtung, Kraftentkopplungseinheit
- 3310: Stützen
- 3301, 3302: Kontaktelemente
- 1400, 2400: Transportvorrichtungen
- 1500: Absauglanze
- L: Laserlichtquelle
- S1: Strahlweiche
- S2: Spiegel
- O1, O2: Optiken
- WS: Wickelschlauch
- WSP: Wickelschlauch-Produkt
- W: Winkel

## Patentansprüche

1. Vorrichtung (1000, 2000, 3000) zur Herstellung von Wickelschlauch-Produkten (WSP), enthaltend:
- eine Wickelmaschine (1100, 2100, 3100) zum Wickeln eines Bandes zu einem Wickelschlauch (WS);
- eine Konfektionierungsmaschine (1200, 2200, 3200) zur Abtrennung von Stücken (WSP) vom genannten Wickelschlauch (WS) und zum Verbinden von Bandlagen in den Endbereichen des Wickelschlauch-Produktes (WSP) durch eine Fügeoperation, wobei die Konfektionierungsmaschine einen Operationskopf (1210, 2210, 3210) enthält,
**dadurch gekennzeichnet, dass**
der Operationskopf beweglich ist und die Vorrichtung dazu eingerichtet ist, die Bewegung des Operationskopfes (1210, 2210, 3210) axial synchronisiert mit dem Wickelschlauch (WS) durchzuführen.

2. Vorrichtung (1000, 2000, 3000) nach Anspruch 1,
**dadurch gekennzeichnet, dass** die Abtrennung durch Schneiden mittels Laserenergie und die Fügeoperation durch Schweißen mittels Laserenergie erfolgt.

3. Vorrichtung (1000, 2000, 3000) nach Anspruch 2,
**dadurch gekennzeichnet, dass** sie zwei unterschiedliche Optiken (O1, O2) für das Laserschweißen und das Lasertrennen enthält.

4. Vorrichtung (1000, 2000, 3000) nach Anspruch 2 oder 3,
**dadurch gekennzeichnet, dass** sie eine Laserquelle (L) und eine integrierte Strahlweiche (S1) enthält.

5. Vorrichtung (1000, 2000, 3000) nach mindestens einem der vorhergehenden Ansprüche,
**dadurch gekennzeichnet, dass** der Operationskopf (1210, 2210, 3210) in mindestens einer translatorischen Richtung und/oder in mindestens einer rotatorischen Richtung beweglich ist.

6. Vorrichtung (1000, 2000, 3000) nach mindestens einem der vorhergehenden Ansprüche,
**dadurch gekennzeichnet, dass** sie dazu eingerichtet ist, die Wickelgeschwindigkeit des Bandes während der Abtrennung von Stücken (WSP) vom Wickelschlauch (WS) und/oder während des Verbindens von Bandlagen in den Endbereichen des Wickelschlauch-Produktes (WSP) zu verändern.

7. Vorrichtung (1000, 2000, 3000) nach Anspruch 6,
**dadurch gekennzeichnet, dass** sie dazu eingerichtet ist, die Wickelgeschwindigkeit des Bandes während der Abtrennung von Stücken (WSP) vom Wickelschlauch (WS) und/oder während des Verbindens von Bandlagen in den Endbereichen des Wickelschlauch-Produktes (WSP) zu verringern.

8. Vorrichtung (1000, 2000, 3000) nach mindestens einem der vorhergehenden Ansprüche,
**dadurch gekennzeichnet, dass** sie dazu eingerichtet ist, bei unrunden Querschnitten des Wickelschlauches (WS) den Operationskopf (1210, 2210, 3210) immer an dessen Außenwand zu positionieren und dort zu bearbeiten.

9. Vorrichtung (1000, 2000, 3000) nach mindestens einem der vorhergehenden Ansprüche,
**dadurch gekennzeichnet, dass** sie mehrere Operationsköpfe (1210, 2210, 3210) enthält, wobei der Winkel (W) zwischen benachbarten Operationsköpfen größer 5°, größer 45°, größer 90°, größer 135°, oder größer 175° ist.

10. Vorrichtung (1000, 2000, 3000) nach mindestens einem der vorhergehenden Ansprüche,
**dadurch gekennzeichnet, dass** der Operationskopf (2210) mindestens einen universalen Modulträger (2215) aufweist.

11. Vorrichtung (3000) zur Herstellung von Wickelschlauch-Produkten (WSP) nach mindestens einem der Ansprüche 1 bis 9, enthaltend:
- eine Kraftentkopplungseinheit (3300) zur Aufnahme von Kräften aus dem Wickelschlauch (WS), welche in diesen von der Wickelmaschine (3100) und/oder von der Konfektionierungsmaschine (3200) eingeleitet werden.

12. Vorrichtung (3000) nach Anspruch 11,
**dadurch gekennzeichnet, dass** die Kraftentkopplungseinheit (3300) mindestens ein Kontaktelement (3301, 3302) aufweist, welches in kraftschlüssigem Kontakt und/oder formschlüssigem Kontakt und/oder Reibkontakt zum Wickelschlauch (WS) steht.

13. Vorrichtung nach Anspruch 11 oder 12,
**dadurch gekennzeichnet, dass** zwei oder mehr Kontaktelemente (3301, 3302) umfänglich verteilt um den Wickelschlauch (WS) herum angeordnet sind.

## Claims

1. Apparatus (1000, 2000, 3000) for producing strip wound tube products (WSP), containing:
- a winding machine (1100, 2100, 3100) for winding a strip into a strip wound tube (WS);
- a finishing machine (1200, 2200, 3200) for separating pieces (WSP) from the mentioned strip wound tube (WS) and for joining strip layers in the end sections of the strip wound tube product (WSP) by a joining operation, wherein the finishing machine contains an operating head (1210, 2210, 3210),
**characterized in that** the operating head is movable and the apparatus is configured to perform the movement of the operating head (1210, 2210, 3210) axially synchronized with the strip wound tube (WS).

2. Apparatus (1000, 2000, 3000) according to claim 1, **characterized in that** the separation takes place by cutting by means of laser energy and the joining operation takes place by welding by means of laser energy.

3. Apparatus (1000, 2000, 3000) according to claim 2, **characterized in that** it contains two different optical systems (O1, O2) for the laser welding and the laser cutting.

4. Apparatus (1000, 2000, 3000) according to claim 2 or 3, **characterized in that** it contains a laser source (L) and an integrated beam switch (S1).

5. Apparatus (1000, 2000, 3000) according to at least one of the preceding claims, **characterized in that** the operating head (1210, 2210, 3210) is movable in at least one translational direction and/or in at least one rotatory direction.

6. Apparatus (1000, 2000, 3000) according to at least one of the preceding claims, **characterized in that** it is configured to change the winding speed of the strip during the separating of pieces (WSP) from the strip wound tube (WS) and/or during the joining of strip layers in the end sections of the strip wound tube product (WSP).

7. Apparatus (1000, 2000, 3000) according to claim 6, **characterized in that** it is configured to reduce the winding speed of the strip during the separating of pieces (WSP) from the strip wound tube (WS) and/or during the joining of strip layers in the end sections of the strip wound tube product (WSP).

8. Apparatus (1000, 2000, 3000) according to at least one of the preceding claims, **characterized in that** it is configured to position the operating head (1210, 2210, 3210) always at the outer wall of the strip wound tube (WS) in case of non-circular cross sections and to process it there.

9. Apparatus (1000, 2000, 3000) according to at least one of the preceding claims, **characterized in that** it contains several operating heads (1210, 2210, 3210), wherein the angle (W) between neighboring operating heads is larger than 5°, larger than 45°, larger than 90°, larger than 135°, or larger than 175°.

10. Apparatus (1000, 2000, 3000) according to at least one of the preceding claims, **characterized in that** the operating head (2210) has at least one universal module carrier (2215).

11. Apparatus (3000) for producing strip wound tube products (WSP) according to at least one of the claims 1 to 9, containing: a force decoupling unit (3300) for absorbing forces from the strip wound tube (WS), which are introduced into this strip wound tube by the winding machine (3100) and/or the finishing machine (3200).

12. Apparatus (3000) according to claim 11, **characterized in that** the force decoupling unit (3300) has at least one contact element (3301, 3302), which is in force fitting contact and/or form fitting contact and/or friction contact with the strip wound tube (WS).

13. Apparatus according to claim 11 or 12, **characterized in that** two or more contact elements (3301,3302) are arranged circumferentially distributed about the strip wound tube (WS).

## Revendications

1. Dispositif (1000, 2000, 3000) de fabrication de produits de tuyaux flexibles à bande enroulée en hélice (WSP), contenant:
- une machine de bobinage (1100, 2100, 3100) pour enrouler une bande à un tuyau flexible à bande enroulée en hélice (WS);
- une machine à conditionner (1200, 2200, 3200) pour séparer des pièces (WSP) dudit tuyau à bande enroulée en hélice (WS) et pour relier des couches de bandes dans des zones d'extrémité du produit de tuyaux flexibles à bande enroulée en hélice (WSP) par une opération d'assemblage, selon lequel la machine à conditionner contient une tête d'opération (1210, 2210, 3210),
**caractérisée en ce que** la tête d'opération est mobile et que le dispositif est adapté à effectuer le mouvement de la tête d'opération (1210, 2210, 3210) d'une manière synchronisée axialement avec le tuyaux flexible à bande enroulée en hélice (WS).

2. Dispositif (1000, 2000, 3000) selon la revendication 1, **caractérisé en ce que** la séparation se fait par coupage au moyen d'énergie laser et l'opération d'assemblage se fait par soudage au moyen d'énergie laser.

3. Dispositif (1000, 2000, 3000) selon la revendication 2, **caractérisé en ce qu'**il contient deux optiques différentes (O1, O2) pour le soudage laser et le découpage laser.

4. Dispositif (1000, 2000, 3000) selon la revendication 2 ou 3, **caractérisé en ce qu'**il contient une source laser (L) et un commutateur de faisceau intégré (S1).

5. Dispositif (1000, 2000, 3000) selon au moins l'une quelconque des revendications précédentes, **caractérisé en ce que** la tête d'opération (1210, 2210, 3210) est mobile dans au moins une direction de translation et/ou dans au moins une direction de rotation.

6. Dispositif (1000, 2000, 3000) selon au moins l'une quelconque des revendications précédentes, **caractérisé en ce qu'**il est adapté à modifier la vitesse de bobinage de la bande pendant la séparation de pièces (WSP) du tuyau flexible à bande enroulée en hélice (WS) et/ou pendant la liaison de couches de bandes dans des zones d'extrémité du produit de tuyaux flexibles à bande enroulée en hélice (WSP).

7. Dispositif (1000, 2000, 3000) selon la revendication 6, **caractérisé en ce qu'**il est adapté à réduire la vitesse de bobinage de la bande pendant la séparation de pièces (WSP) du tuyau flexible à bande enroulée en hélice (WS) et/ou pendant la liaison de couches de bandes dans des zones d'extrémité du produit de tuyaux flexibles à bande enroulée en hélice (WSP).

8. Dispositif (1000, 2000, 3000) selon au moins l'une quelconque des revendications précédentes, **caractérisé en ce qu'**il est adapté - en cas d'une section transversale non circulaire du tuyau flexible (WS) - à positionner la tête d'opération (1210, 2210, 3210) toujours à la paroi extérieure du tuyau flexible à bande enroulée et à l'y travailler.

9. Dispositif (1000, 2000, 3000) selon au moins l'une quelconque des revendications précédentes, **caractérisé en ce qu'**il contient plusieures têtes d'opération (1210, 2210, 3210), selon lequel l'angle (W) entre des têtes d'opération adjacentes est plus de 5°, plus de 45°, plus de 90°, plus de 135°, ou plus de 175°.

10. Dispositif (1000, 2000, 3000) selon au moins l'une quelconque des revendications précédentes, **caractérisé en ce que** la tête d'opération (2210) a au moins un support de module universel (2215).

11. Dispositif (3000) de fabrication de produits de tuyaux flexibles à bande enroulée en hélice (WSP) selon au moins une des revendications 1 à 9, contenant: une unité de découplage de force (3300) pour absorber des forces hors du tuyau flexible à bande enroulée en hélice (WS), lesquelles y sont introduites par la machine de bobinage (3100) et/ou par la machine à conditionner (3200).

12. Dispositif (3000) selon la revendication 11, **caractérisé en ce que** l'unité de découplage de force (3300) a au moins un élément de contact (3301, 3302), qui se trouve en contact par force et/ou par forme et/ou par friction avec le tuyau flexible à bande enroulée en hélice (WS).

13. Dispositif selon la revendication 11 ou 12, **caractérisé en ce que** deux ou plus des éléments de contact (3301,3302) sont repartis d'une manière circonférentielle autour du tuyau flexible à bande enroulée en hélice (WS).
